# EUROPÄISCHE PATENTSCHRIFT

(11) **EP 1 648 796 B1**
(45) Veröffentlichungstag und Bekanntmachung des Hinweises auf die Patenterteilung: **02.03.2011**
(21) Anmeldenummer: 04738084.5
(22) Anmeldetag: 13.07.2004
(51) Int. Cl.: B65D 51/28, B65D 81/32

(54) **KUNSTSTOFFGETRÄNKEFLASCHE MIT KAPSEL**
PLASTIC DRINKS BOTTLE WITH BLISTER
BOUTEILLE EN PLASTIQUE POUR BOISSON POURVUE D'UNE CAPSULE

(30) Priorität: 30.07.2003 CH 133203
(43) Veröffentlichungstag der Anmeldung: 26.04.2006
(73) Patentinhaber: RM BETEILIGUNGS AG, 8260 Stein am Rhein (CH)
(72) Erfinder: MÜHLEMANN, Rolf, CH-8255 Schlattingen (CH)
(74) Vertreter: Schneider Feldmann AG Patent- und Markenanwälte
(86) Internationale Anmeldenummer: PCT/CH2004/000444
(87) Internationale Veröffentlichungsnummer: WO 2005/009862

(56) Entgegenhaltungen:
- WO-A-99/37553
- FR-A- 1 434 918
- FR-A- 2 290 366
- GB-A- 1 211 168
- US-A- 3 578 524
- US-A- 3 701 699
- US-A- 5 360 116
- US-B1- 6 230 884

## Beschreibung

Die vorliegende Erfindung betrifft eine Kunststoffgetränkeflasche mit einem Hals und einem darauf angebrachten Verschluss und einer Aluminiumkapsel mit darin eingeschlossenem, in den Flascheninhalt abzugebendem Wirkstoff in fester, pulveriger oder flüssiger Form mit den Merkmalen des Oberbegriffes des Patentanspruches 1.

Seit einigen Jahren sind Aluminiumkapseln bekannt, in denen Wirkstoffe lagerfähig aufbewahrt werden, bevor sie einer Grundsubstanz beigegeben werden. Eines der bekannten Beispiele ist Kaffee in Kapseln, die mit frisch aufgebrühtem Wasser durchgespült werden.

Getränke mit einem hohen Vitamingehalt sind nur sehr beschränkt haltbar, da sich die Vitamine unter Einfluss von Wärme oder Licht zersetzen. Entsprechend müssen solche Getränke gekühlt aufbewahrt und transportiert werden, was zu einem höheren Verkaufspreis führt. Eine Abfüllung in nicht transparente oder durchscheinende Flaschen führt ebenfalls zu höheren Kosten und vermindert deren ästhetisches Aussehen. Dies bedingt zur Kompensation eine vollständige bedruckte Umhüllung.

Aus der WO 00/27717 ist eine Lösung mit den Merkmalen des Oberbegriffs von Patentanspruch 1 bekannt. Hierbei wird eine Kapsel mit der Erhöhung nach oben auf den Flaschenhals aufgelegt und mit einem Verschluss darauf klemmend gehalten. Der Verschluss ist so gestaltet, dass durch Druck auf dessen flexible Deckfläche die Kapsel zerstört und der Inhalt in den Behälter abgebbar ist.

Eine ähnlich gestaltete Lösung ist bereits aus der WO 98/40289 bekannt. Jedoch wurde hier die Kapsel im Verschluss selbst untergebracht. Der Verschluss hat einen Mechanismus, der es erlaubt, die Kapsel aufzustechen. Logistisch verlangt dies, dass die Kapseln in den Verschluss abgefüllt und darin gehalten werden, bevor sie zu einem Abfüllbetrieb geliefert werden. Dies ist aus hygienischen und logistischen Gründen praktisch kaum durchführbar.

Während man in der WO 98/40289 davon ausging, dass nach der Entleerung der Kapsel der Verschluss entfernt wird und die Kapsel entfernt werden soll, hat man in einer Lösung gemäss der WO 01/36289 vorgeschlagen, den Behälter mit einem Verschluss zu versehen, der einen Durchstosser umfasst, der in einer Tülle verschiebbar ist und so gleichzeitig als Durchstosser wie auch als Ventil zu wirken hat.

Letztlich ist aus der GB-A-2'364'699 auch ein Verschluss mit einer Kapsel bekannt, die unter Zwischenlage von einer Sichtscheibe im Verschluss und auf den Behälterhals dichtend gehalten werden soll.

In den heute bekannten Abfüllanlagen sind hohe Geschwindigkeiten unerlässlich. Es ist folglich undenkbar, dass eine Kapsel auf einen Behälterhals nach der Abfüllung aufgelegt und danach ein Verschluss aufgeschraubt werden kann. In diesem Zeitraum findet nämlich auf einer Transferstrecke auch der Transport statt, und folglich würden lose aufgelegte Kapseln abfallen, bevor ein Verschluss darüber gestülpt werden kann und aufgeschraubt ist. Auch findet bei vielen Getränken beim Abfüllen ein Nachschäumen statt, was ebenfalls zu einem Abfallen der Kapsel vom Flaschenhals führen kann.

Die Herstellung von Aluminiumkapseln erfolgt mit einer sehr hohen Massgenauigkeit. Dies trifft auch auf die Ausgestaltung der Flaschenhälse zu. Problematischer ist dies jedoch in Bezug auf die Verschlüsse. Entsprechend ist die Montage von Kapseln in Verschlüsse problematisch und bedingt zwingend zusätzliche Dichtungsmassnahmen, beispielsweise die Einlage von Weichgummidichtringen und dergleichen. Dies bringt einen erhöhten Materialaufwand und einen zusätzlichen Montageschritt mit den entsprechend höheren Kosten mit sich.

Die DE-AS-1561546 zeigt einen Behälter für Flüssigkeiten mit einem Aufnahmeteil und einem Stützteil, wobei der Aufnahmeteil aus einer Kunststofffolie an der Innenseite des steifen Stützteiles aus kompressiblen Werkstoff eng anliegt und die Verankerung zwischen beiden Teilen mittels eines, über den oberen Stützteilaussenrandes herumgebogenen Flansches des Aufnahmeteils erfolgt. Dabei wird ein Wulst des Flansches in das Stützteilmaterial eingepresst.

In der WO-A-9937553 ist ein Verschluss für einen Flüssigkeitsbehälter offenbart, der durch zwei übereinander angeordnete Folien gebildet ist, die an einem Randflansch der Öffnung des Behälters flüssigkeitsdicht angeordnet sind. Zwischen beiden Folien befindet sich ein Hohlraum zur Aufnahme eines in der Flüssigkeit löslichen Zusatzstoffes oder dergleichen.

Derartige Folien können zum Beispiel gemäss der US-A-3701699 mittels Wärme und Druck mit einem Randflansch verschweisst werden.
Bei einem weiteren Schraubverschluss gemäss FR-A-2290366 werden zwei Folien mit dazwischen angeordnetem Zusatzstoff mittels eines umlaufenden Randes des Verschlusses auf dem Randflansch der Öffnung des Behälters gehalten.

Ohne die Lösung der eingangs erwähnten Probleme ist mit einer erfolgreichen Markteinführung nicht zu rechnen. Entsprechend hat sich der Erfinder die Aufgabe gestellt, eine Flasche und eine Aluminiumkapsel so zu gestalten, dass unter Anwendung ebenfalls erfindungsgemässer Verfahren eine Abfüllung auf heute bekannten Abfüllanlagen ohne Qualitäts- und Quantitätsverluste getätigt werden kann.

Diese und andere Aufgaben werden durch die in Anspruch 1 definierte Kunststoffgetränkeflasche und das in Anspruch 6 definierte Verfahren zum Verschliessen der Kunststoffgetränkeflasche gelöst.

Die direkte Schweissung der Kapsel auf den Behälterhals bringt mehrere Zusatzvorteile. Durch die Schweissung werden sonst vorhandene Dichtungsprobleme gelöst. Die Schweissung, die ansonsten nur bei oxydationsgefährdeten Produkten wie Ketchup oder öligen Substanzen üblich ist, führt hier zu hoher Dichtigkeit, die nicht nur die Lagerfähigkeit des Produktes erhöht, sondern auch die sonst erforderliche Dichtung zwischen Kapsel und Verschluss sowie zwischen Kapsel und Flasche entbehrlich macht.

Dank der passgenauen Gestaltung der Kapsel kann diese so auf den Flaschenhals aufgebracht werden, dass ein Abschwemmen durch ein nachschäumendes Getränk nicht erfolgen kann.

Die Passgenauigkeit kann auch zu einer klemmenden Halterung in der Aufnahme des Schweisskopfes verwendet werden, wodurch eine innige Verbindung zum Schweissstempel sicher gestellt ist. Nach erfolgter Schweissung wird die Kapsel aus der Halterung gezogen. Ist die Schweissung ausnahmsweise ungenügend, so wird die Kapsel in der Halterung verbleiben und die unverschweisste Flasche ausgesondert.

In den anliegenden Zeichnungen sind die zwei zur Zeit wesentlichen Varianten der Erfindung dargestellt und anhand der nachfolgenden Beschreibung erläutert. Es zeigt:
- Figur 1A-D: einen Flaschenhals und eine Kapsel in vier verschiedenen Montageschritten, wobei die Erhöhung der Kapsel in den Flaschenhals hineinragt, während
- Figur 2A-D: einen Flaschenhals und eine Kapsel, die nicht Teil der Erfindung sind, in vier Montageschritten zeigt, wobei die Kapsel mit seiner Erhöhung vom Flaschenhals nach oben ragt.
- Figur 3A+B: zeigt die Kapsel für sich in grösserem Massstab, wobei diese einmal in Seitenansicht teilweise geschnitten und einmal in der Aufsicht auf die erhöhte Fläche dargestellt ist, während

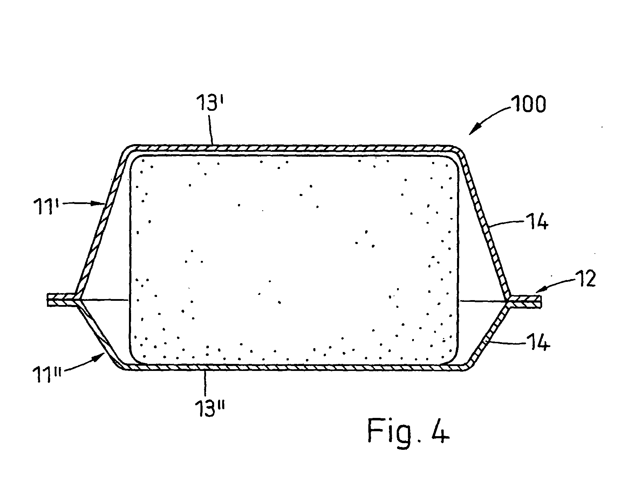

- Figur 4: eine alternative Form einer Kapsel im Diagonalschnitt zeigt.

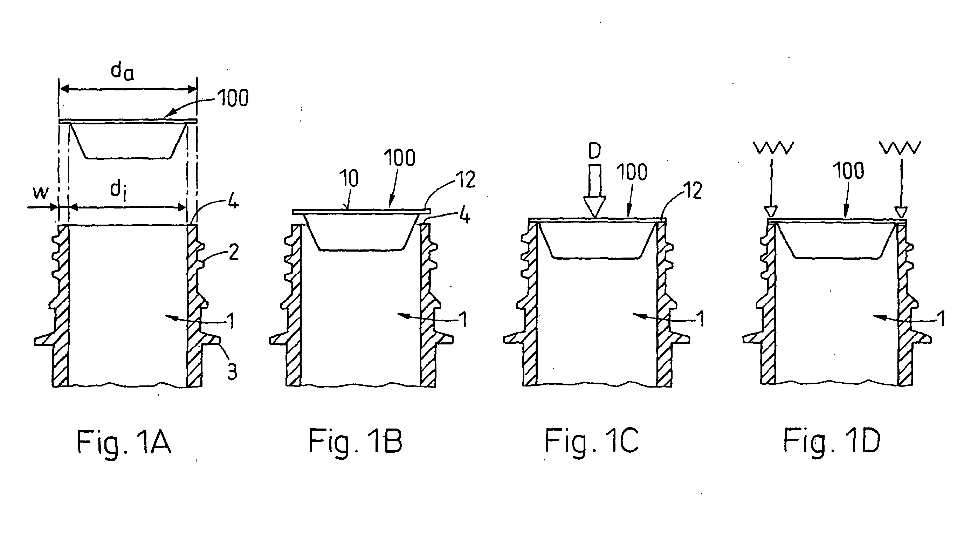

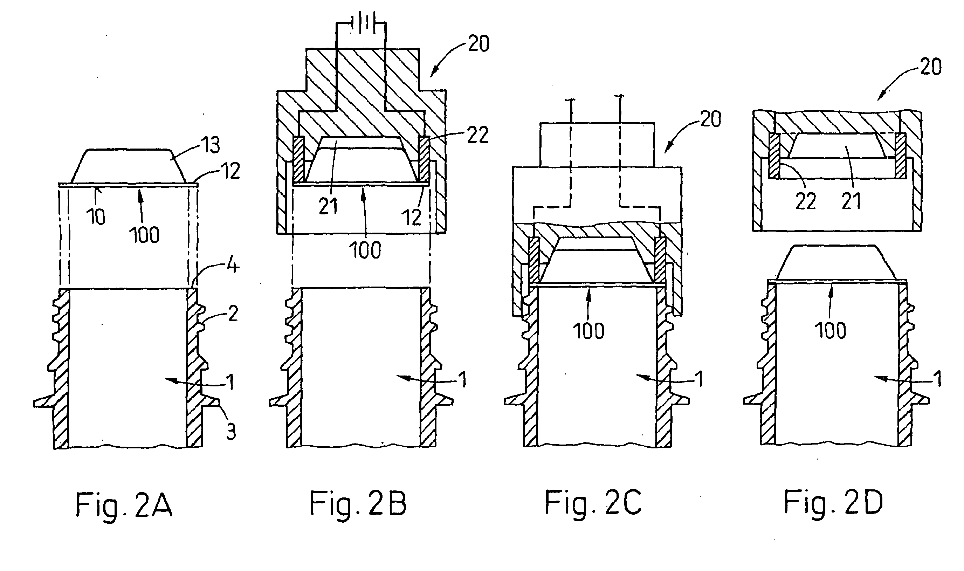

In den Figuren 1A-D und 2A-D ist mit 1 ein Flaschenhals bezeichnet. Allgemeiner wird dieser auch Behälterhals 1 genannt. Die Gesamtheit des Behälters oder der Flasche ist nicht dargestellt, da der Flaschen- oder Behälterkörper erfindungsunwesentlich ist und beliebig gestaltet sein kann.

Ebenso ist die Gestaltung des Verschlusses nicht relevant und entsprechend hier nicht dargestellt. Beim Verschluss kann es sich folglich um einen Schraubverschluss oder um einen Scharnierverschluss handeln, und die Verbindung zwischen Flaschen- bzw. Behälterhals 1 und dem Verschluss kann praktisch alle bekannten Verbindungsformen, wie Gewinde, Prellwulst oder Krallenverschluss umfassen. Ebenso könnte im Prinzip auch der Querschnitt des Behälterhalses 1 eine beliebige Form haben, wenn nicht auf eine Gewindeverbindung abgestellt wird.

Wichtig ist jedoch die genaue formliche Anpassung der Kapsel an den Behälterhals 1. Da man ohnehin bei der Kapselfertigung möglichst wenig Varianten wünscht, wird man vorzugsweise bei den wenigen üblichen Normen von Getränkeflaschen bleiben, wobei hier die bekannten Weithalsflaschen mit einem Behälterhals-Durchmesser über 20 mm bevorzugt werden. In den Figuren ist ein solcher Normflaschenhals dargestellt mit einem Aussengewinde 2 und einem unteren Haltekragen 3, der bei der Fertigung des Vorformlings zur Flasche zur Halterung in der Blasmaschine benötigt wird. Die Flaschenhälse, die in Spritzgussformen gefertigt werden, sind äusserst formgenau und verändern sich beim Blasvorgang nicht. Folglich sind die Masse eines solchen Flaschenhalses in sehr engen Toleranzen. Die hier interessierenden Grössen sind der Aussendurchmesser des Flaschenhalses dₐ, der Innendurchmesser des Flaschenhalses dᵢ und die Flaschenhalswandstärke w, die sich somit als 1/2 (dₐ - dᵢ) ergibt.

Auch die Flaschenhalsstirnfläche 4 muss exakt gestaltet sein. Hier ist die Ebenheit der Flaschenhalsstirnfläche 4 von Bedeutung. Unebenheiten führen zu einer Verschlechterung der Schweissung, die noch zu beschreiben ist.

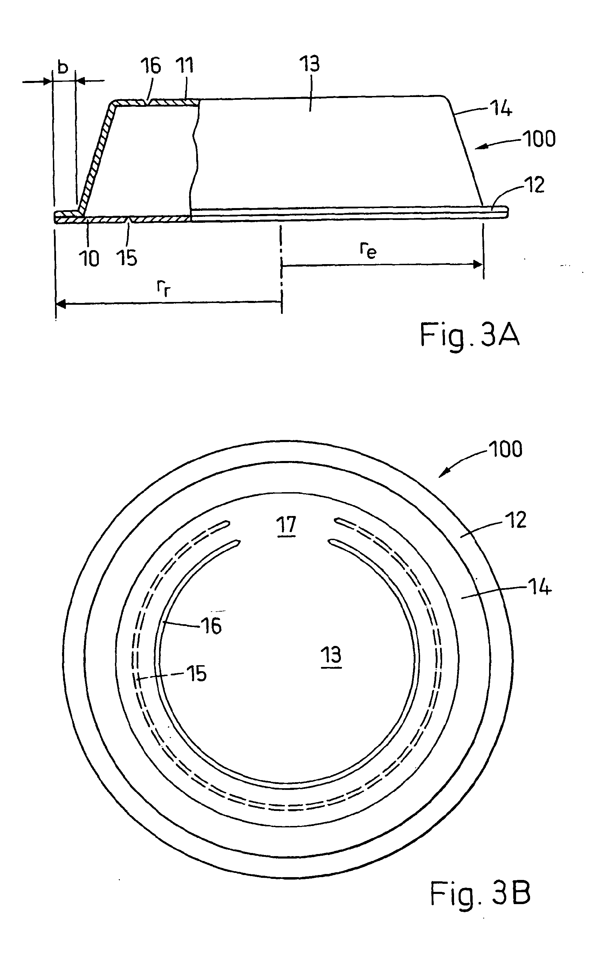

Mit Hinweis auf die Figuren 3A und B sei nun auch auf die Gestaltung der Kapsel eingegangen. Die Kapsel selbst ist gesamthaft mit 100 bezeichnet. Sie besteht aus zwei Folien, wobei die eine Folie eine ebene Fläche 10 und die andere Folie eine Fläche mit mittiger Erhöhung 11 bildet. Diese beiden Flächen 10 und 11 sind im Bereich eines umlaufenden Randes 12 miteinander verbunden. Im Bereich des Randes 12 sind die beiden Folien 10, 11 verschweisst oder verklebt. Oftmals handelt es sich bei den Folien 10, 11 um beschichtete Aluminiumfolien, wobei die Schweissung eigentlich eine Schweissverbindung der Beschichtungen darstellt, die bei wesentlich tieferen Temperaturen möglich ist als eine Aluminium-auf-Aluminium-Schweissung.

Der Aussendurchmesser der Kapsel entspricht dem Durchmesser des Randes und beträgt 2rᵣ. Der Durchmesser der oberen parallelen Fläche, der so genannten mittigen Erhebung 13, spielt ebenso wie die Höhe dieser Erhebung 13 eine untergeordnete Rolle. Von der Erhebung 13 läuft eine konisch geneigte Wand 14 bis auf den Rand 12 hinunter. Die Neigung sollte relativ steil sein und vorzugsweise von der Horizontalen des Randes 12 mit einem Winkel von ca. 85° bis 60° nach oben geneigt verlaufen. Diese Neigung erleichtert ein automatisches Aufsetzen der Kapseln auf einen Behälterhals ohne zu verkanten.

Die Breite b des Randes 12 entspricht relativ genau dem Mass w der Stirnwandfläche des Behälterhalses 1. Folglich entspricht der Innendurchmesser 2rₑ des Randes 12 dem Innendurchmesser dᵢ des Behälterhalses. Diese beiden Masse sind so aufeinander abgestimmt, dass die Kapsel 100 passgenau im Behälterhals 1 Aufnahme findet. Dies bedeutet, dass bei einem Auflegen der Kapsel 100 mit der Erhebung zur Behälterhalsinnenseite hin, diese unter dem Eigengewicht zentrierend hineinfällt, wie dies in Figur 1B dargestellt ist. Erst unter Druck D kommt die Kapsel in die Endlage, bei der sie klemmend im Behälterhals 1 gehalten ist und der Rand 12 der Kapsel auf die Behälterhalsstirnfläche 4 aufliegt, wie dies in Figur 1C dargestellt ist. In dieser Position wird ein Nachschäumen eines eingefüllten Getränkes unterbunden, und ein Abschwemmen der Kapsel ist nicht möglich. Dies erlaubt es auch, das Behältnis von der Abfüllstation weiter zu transportieren und in der entfernten Position die Verschweissung, wie in Figur 1D symbolisch dargestellt, vorzunehmen.

Diese Anordnung entspricht nicht der herkömmlichen Anordnung von Kapseln auf Flaschen. Insbesondere wenn die Kapseln als Blister gestaltet sind, ist diese Anordnung unmöglich, da nur die ebene Fläche 10 hier durchstossbar ist. Entsprechend wird bei der hier gewählten Aluminiumkapsel 100 vorgeschlagen, die Flächen 10 und 11 mit Sollreisslinien 15 bzw. 16 zu versehen (vgl. Figur 3). Dies sind in der Folie bei der Formgebung eingepresste Dünnstellen in der Form von Rillen, die eine entsprechende Durchtrennung erleichtern. Die Sollreisslinien 15, 16 sind als mindestens zu drei Vierteln umlaufende Kreislinien gestaltet, so dass eine ungeschwächte Umbiegzone 17 verbleibt.

Da die Kapsel 100 auf dem Behälterhals 1 verbleibt, ist es sinnvoll, kreisförmige Sollreisslinien 15 und 16 sowohl auf der flachen Seite 10 als auch auf der Seite mit mittiger Erhebung 13 anzubringen. Dabei wird man die Durchmesser beider Sollreisslinien so wählen, dass der grössere Durchmesser näher dem Behälterinnenraum zu liegt.

Gewisse Umstände, insbesondere relativ kleine Behälterhalsdurchmesser können jedoch dazu führen, dass die Variante wie in den Figuren 2A bis 2D dargestellt, die nicht in Teil der Erfindung ist, gewählt werden muss.

Bezüglich der zuvor gemachten Ausführungen den Behälterhals betreffend, gilt bei der Ausführungsform nach Figuren 2A bis 2D dasselbe wie bei der Lösung nach Figuren 1A bis 1D erwähnt. Die Bezugszahlen wurden beibehalten. Die mittige Erhebung 13 der Kapsel ragt nun vom Behälterhals 1 weg nach oben. Entsprechend ist das Verfahren gegenüber der zuvor beschriebenen Lösung verschieden. Die Passgenauigkeit ist nun nicht mehr zwischen Kapsel 100 und Behälterhals 1 erforderlich, sondern zwischen einem Schweisskopf 20 und der Kapsel 100. Der Schweisskopf hat einen Aufnahmeraum 21, in den die Kapsel 100 wie zuvor im Behälterhals 1 passgenau klemmend Aufnahme findet. Hält die Kapsel nicht im Aufnahmeraum 21, so ist sie massungenau und fällt hinaus. Dies bildet eine automatische Masskontrolle. Diese Situation ist in der Figur 2B dargestellt.

Umlaufend um den Aufnahmeraum 21 ist eine elektrisch beheizte Ringwand 2 als Heizstempel 22 gezeigt. Dieser Heizstempel wird bevorzugt gefedert gelagert, wobei erst in der gedrückten Position ein elektrischer Kontakt gebildet wird. Dies erfolgt, indem der Schweisskopf 20 über den Behälterhals gedrückt wird, bis der Kragen auf die Behälterhalsstirnfläche 4 drückt und der Heizstempel 22 auf den Rand 12 der Kapsel drückt und die Schweissung erfolgt.

Beim Aufheben des Schweisskopfes 20 wird die Kapsel 100 aus dem Aufnahmeraum 21 gezogen, in dem die Kapsel klemmend gehalten ist. Hierbei wird ein Zug auf die Schweissverbindung zwischen Flaschenhals und Kapsel ausgeübt. Bei korrekter Verschweissung verbleibt die Kapsel auf dem Flaschenhals (Figur 2D), während eine unkorrekte Schweissung diese Kraft nicht aufzunehmen vermag und die Kapsel abgerissen wird. Dies bildet eine weitere Kontrolle.

Die erstbeschriebene Lösung bedingt einen geringen maschinellen Aufwand. Trotzdem kann es Abfüllanlagen geben, bei denen die zweite Variante, die nicht Teil der Erfindung ist, mit geringerem Aufwand realisierbar ist. Für nachschäumende Getränke ist die zweite Variante jedoch kaum geeignet.

Da die Abgabemenge des zuzuführenden Substrates, Wirkstoffes oder anderen Zusatzes sehr unterschiedlich sein kann, wird zusätzlich hier auch eine Lösung vorgeschlagen, bei der die beiden Flächen 10' und 11' beide mit einer entsprechenden Erhebung 13' bzw. 13" versehen sind. Prinzipiell können diese beiden Erhebungen 13' und 13" gleich hoch sein. Bevorzugterweise wird man diese jedoch unterschiedlich gestalten. Je nach Konstruktion des aufzusetzenden Verschlusses lässt der verbleibende Raum unter dem Verschluss eine grössere oder kleinere Erhebung zu. Bei der Verwendung dieser Kapseln wird man immer die Kapsel auf dem Flaschenhals zentriert anpressen und aufschweissen, wie bereits zuvor beschrieben. Die zuvor beschriebenen Dimensionierungsbedingungen müssen auch hier eingehalten werden.

### Bezugszeichen

- 1: Behälterhals bzw. Flaschenhals
- 2: Gewinde
- 3: Haltekragen
- 4: Behälterhalsstirnfläche
- dₐ: Aussendurchmesser des Flaschenhalses
- dᵢ: Innendurchmesser des Flaschenhalses
- w: Flaschenhalswandstärke
- 100: Kapsel
- 10: ebene Fläche
- 11: Fläche mit mittiger Erhebung
- 12: Rand
- 13: Erhebung
- 14: geneigte Wand
- 15: Sollreisslinie
- 16: Sollreisslinie
- 17: Umbiegzone
- 20: Schweisskopf
- 21: konischer Aufnahmeraum
- 22: Heizstempel

## Patentansprüche

1. Kunststoffgetränkeflasche mit einem Hals (1) und einem darauf angebrachten Verschluss und einer Aluminiumkapsel (100) mit darin eingeschlossenem, in den Flascheninhalt abzugebendem Wirkstoff in fester, pulveriger oder flüssiger Form, wobei die Aluminiumkapsel (100) über dem Behälterhals (1) angeordnet ist, und die Kapsel (100) mindestens eine Fläche mit mittiger Erhöhung (11) aufweist, die zu einem umlaufenden Rand (12) hin konisch hinuntergezogen ist, **dadurch gekennzeichnet, dass** der Aussendurchmesser des umlaufenden Randes (12) der Kapsel (100) dem Aussendurchmesser dₐ des Behälterhalses (1) entspricht, während der Innendurchmesser des umlaufenden Randes (12) passgenau dem Innendurchmesser dᵢ des Behälterhalses (1) entspricht, so dass sich die Kapsel (100) selbsttätig auf dem Behälterhals (1) zentriert, und dass der umlaufende Rand (12) mit dem Behälterrand verschweisst ist.

2. Kunststoffgetränkeflasche nach Anspruch 1, **dadurch gekennzeichnet, dass** die Kapsel (100) an ihrer in aufgeschweisstem Zustand zur Flascheninnenseite gelegenen Fläche mit einer Sollreisslinie (15, 16) versehen ist, die mindestens eine zu drei Vierteln umlaufende Kreislinie darstellt, wobei eine ungeschwächte Umbiegzone (17) verbleibt.

3. Kunststoffgetränkeflasche nach Anspruch 1, **dadurch gekennzeichnet, dass** die Kapsel (100) so aufgeschweisst ist, dass die mindestens eine mittige Erhöhung in den Behälterhals hineinragt.

4. Kunststoffgetränkeflasche nach Anspruch 1, **dadurch gekennzeichnet, dass** die Kapsel (100) beidseitig eine Erhöhung (11',11") in Bezug auf die Ebene, in der der umlaufende Rand (12) verläuft, aufweist.

5. Kunststoffgetränkeflasche nach Anspruch 4, **dadurch gekennzeichnet, dass** die beiden Erhöhungen (11',11") sich unterschiedlich hoch von der Ebene, in der der umlaufende Rand (12) sich erstreckt, erheben.

6. Verfahren zum Verschliessen einer Kunststoffgetränkeflasche mit einer Kapsel (100) mit den Merkmalen nach den Anspruch 1, **dadurch gekennzeichnet, dass** auf die gefüllte Flasche die Kapsel (100) mit der mindestens einen Erhöhung (11) zum Inneren des Behälterhalses (1) hingerichtet aufgelegt wird, wobei sich die Kapsel (100) unter Einfluss der Schwerkraft selbsttätig auf den Behälterhals (1) zentriert, und dass danach die Kapsel (100) mit einem ringförmigen Schweissstempel (22) oder mit einer Hochfrequenzsonde aufgeschweisst wird.

7. Verfahren nach Anspruch 6, **dadurch gekennzeichnet, dass** die zentrierte Kapsel (100) klemmend in den Behälterhals (1) gedrückt wird, bis der Rand (12) der Kapsel (100) auf den Behälterhals (1) aufliegt, worauf in einer nächsten Station eine Schweissung stattfindet.

## Claims

1. A synthetic material beverage bottle comprising a neck (1) and a closure attached thereon and an aluminum capsule (100) comprising an active substance in solid, powdery or liquid form, which is to be added to the bottle content, wherein the aluminum capsule (100) is arranged above the container neck (1), and the capsule (100) encompasses at least one surface comprising a centered elevation (11), which is pulled down conically towards a revolving edge (12), **characterized in that** the outer diameter of the revolving edge (12) of the capsule (100) corresponds to the outer diameter dₐ of the container neck (1), while the inner diameter of the revolving edge (12) corresponds to the inner diameter dᵢ of the container neck (1) with an accurate fit, so that the capsule (100) centers automatically on the container neck (1) and that the revolving edge (12) is welded to the container edge.

2. The synthetic material beverage bottle according to claim 1, **characterized in that** the capsule (100) is provided on its surface, which faces the bottle interior when in the welded state, with a reference tear seam (15, 16), which represents at least one circular line, which performs at least a three-quarter revolution, wherein an unattenuated bending zone (17) remains.

3. The synthetic material beverage bottle according to claim 1, **characterized in that** the capsule (100) is welded such that the at least one centered elevation projects into the container neck.

4. The synthetic material beverage bottle according to claim 1, **characterized in that** the capsule (100) encompasses an elevation (11', 11") on both sides with reference to the plane, in which the revolving edge (12) extends.

5. The synthetic material beverage bottle according to claim 4, **characterized in that** the two elevations (11', 11") rise at different heights from the plane, in which the revolving edge (12) extends.

6. A method for closing a synthetic material beverage bottle comprising a capsule (100) comprising the features according to claim 1, **characterized in that** the capsule (100) comprising the at least one elevation (11) is applied to the filled bottle oriented towards the interior of the container neck (1), wherein the capsule (100) centers automatically towards the container neck (1) under the impact of gravity and that the capsule (100) is subsequently welded by means of a ring-shaped weld stamps (22) or by means of a high-frequency probe.

7. The method according to claim 6, **characterized in that** the centered capsule (100) is pressed into the container neck (1) in a clamping manner until the edge (12) of the capsule (100) rests on the container neck (1), whereupon a welding takes place in a next station.

## Revendications

1. Bouteille pour boissons en matière plastique, avec un goulot (1) et une fermeture montée sur ce dernier et une capsule en aluminium (100) avec un principe actif renfermé dans cette dernière, à restituer dans le contenu de la bouteille, sous forme solide, pulvérulente ou liquide, la capsule en aluminium (100) étant placée au dessus du goulot du récipient (1) et la capsule (100) comportant au moins une surface avec une élévation centrale (11), qui est tirée vers le bas sous forme conique vers un bord périphérique (12), **caractérisée en ce que** le diamètre extérieur du bord périphérique (12) de la capsule (100) correspond au diamètre extérieur (dₐ) du goulot du récipient (1), alors que le diamètre intérieur du bord périphérique (12) est parfaitement ajusté au diamètre intérieur (dᵢ) du goulot du récipient (1), de sorte que la capsule (100) s'autocentre sur le goulot du récipient (1) et **en ce que** le bord périphérique (12) est soudé sur le bord du récipient.

2. Bouteille pour boissons en matière plastique selon la revendication 1, **caractérisée en ce que** sur sa surface placée sur la face intérieure de la bouteille, lorsqu'elle est soudée sur celle-ci, la capsule (100) est munie d'une ligne de rupture théorique (15, 16) qui représente une circonférence périphérique au moins aux trois quarts, une zone de cintrage (17) intacte restant préservée.

3. Bouteille pour boissons en matière plastique selon la revendication 1, **caractérisée en ce que** la capsule (100) est soudée de sorte que l'au moins une élévation centrale saillisse dans le goulot du récipient.

4. Bouteille pour boissons en matière plastique selon la revendication 1, **caractérisée en ce que** la capsule (100) comporte de part et d'autre une élévation (11', 11") par rapport au plan dans lequel s'étend le bord périphérique (12).

5. Bouteille pour boissons en matière plastique selon la revendication 4, **caractérisée en ce que** les deux élévations (11', 11") sont relevées à différentes hauteurs à partir du plan dans lequel s'étend le bord périphérique (12).

6. Procédé de fermeture d'une bouteille pour boissons en matière plastique avec une capsule (100) possédant les attributs selon la revendication 1, **caractérisé en ce que** sur la bouteille remplie, on pose la capsule (100) avec l'au moins une élévation (11), de sorte qu'elle soit dirigée vers l'intérieur du goulot du récipient (1), sous l'influence de la force de gravité, la capsule (100) s'autocentrant sur le goulot de la bouteille (1) et **en ce que** par après, on soude la capsule (100) à l'aide d'un poinçon à souder (22) annulaire ou à l'aide d'une sonde haute fréquence.

7. Procédé selon la revendication 6, **caractérisé en ce qu'**on pousse la capsule (100) dans le goulot du récipient (1) de sorte à la serrer, jusqu'à ce que le bord (12) de la capsule (100) repose sur le goulot du récipient (1), suite à quoi, une opération de soudage étant effectuée dans un poste de travail suivant.
